# EUROPÄISCHE PATENTSCHRIFT

(11) **EP 0 565 568 B1**
(45) Veröffentlichungstag und Bekanntmachung des Hinweises auf die Patenterteilung: **19.03.1997**
(21) Anmeldenummer: 92902043.6
(22) Anmeldetag: 05.12.1991
(51) Int. Cl.: G01N 27/406

(54) **MESSFÜHLER ZUR BESTIMMUNG DES SAUERSTOFFGEHALTES IN GASEN**
SENSOR FOR DETERMINING THE OXYGEN CONTENT OF GASES
CAPTEUR POUR LA DETERMINATION DE LA TENEUR EN OXYGENE DE GAZ

(30) Priorität: 04.01.1991 DE 4100106
(43) Veröffentlichungstag der Anmeldung: 20.10.1993
(73) Patentinhaber: ROBERT BOSCH GMBH, 70442 Stuttgart (DE)
(72) Erfinder: FRIESE, Karl-Hermann, D-7250 Leonberg (DE); WIEDENMANN, Hans-Martin, D-7000 Stuttgart 1 (DE)
(86) Internationale Anmeldenummer: DE9100950
(87) Internationale Veröffentlichungsnummer: WO9212420

(56) Entgegenhaltungen:
- EP-A- 0 331 050
- WO-A-89/04480
- DE-A- 2 656 648
- DE-A- 2 830 778
- DE-A- 3 706 079
- DE-A- 3 813 930
- DE-A- 4 004 172
- US-A- 4 199 425

## Beschreibung

### Stand der Technik

Die Erfindung geht aus von einem Meßfühler nach der Gattung des Hauptanspruches. Es ist bereits ein derartiger Meßfühler bekannt (DE-OS 37 37 215), mit einem Festelektrolytkörper, mindestens einer Elektrode auf der dem Meßgas ausgesetzten Seite des Festelektrolytkörpers, sowie einer Schutzschicht mit katalytisch aktiven Stoffen auf der dem Meßgas ausgesetzten Elektrode bzw. Elektroden, wobei der katalytisch aktive Stoff Platin oder eine Platinlegierung ist. Der Einbau katalytisch aktiver Stoffe in die poröse Schutzschicht, die die dem Meßgas ausgesetzte Elektrode bedeckt, ist notwendig, um die Einstellung des thermodynamischen Gleichgewichtes des Abgases zu beschleunigen, und eine Regellage möglichst nahe bei λ = 1 zu erreichen. Es hat sich aber gezeigt, daß Platin bei niedrigen Abgastemperaturen die Gleichgewichtseinstellung nicht in zufriedenstellendem Maße zu katalysieren vermag. Hingegen zeigt Rhodium bei niedrigen Temperaturen eine hervorragende katalytische Wirkung, insbesondere bezüglich der Reduktion von Stickoxiden.

In der Veröffentlichung SAE Paper Nr. 880557 "Multi Layered Zircona Oxygen Sensor with Modified Rhodium Catalyst Electrode" wird eine plättchenförmige Sauerstoffsonde vorgeschlagen, die auf einer Platin-Elektrode eine RhodiumSchicht gegebenenfalls eine isolierende Zwischenschicht vorgesehen ist. Durch diesen Schichtaufbau wird die Gleichgewischtseinstellung im Abgas und damit die Sondencharakteristik verbessert. Die Platinelektrode sowie der Rodiumkatalysator werden in übereinanderliegenden Schichten mittels Siebdruck aufgebracht. Es sind somit zumindest zwei Arbeitsgänge notwendig und der Verbrauch an Edelmetall ist realtiv hoch. Werden die Platin- bzw. Rhodiumschicht direkt übereinander, ohne trennende Isolierschicht aufgebracht, kommte es zusätzlich zur Legierungsbildung, wodurch ein Teil des Rhodiums seine katalytische Wirkung verliert. Der Rohstoff Rhodium ist jedoch mehr als fünfmal teurer als Platin und die einzusetzende Menge sollte deshalb möglichst gering gehalten werden.

Eine aus einem Cermet-Material bestehende Elektrodenschicht ist ferner aus dem Dokument DE-A-38 13 930 bekannt, die neben dem Festelektrolytmaterial mindestens zwei Platingruppenmetalle enthält. Auch hier kommt es, wie bei der beschriebenen Schutzschicht, zwischen den Platingruppenmetallen zur Legierungsbildung, wodurch die katalytische Wirkung der Elektrode reduziert wird.

### Vorteile der Erfindung

Der erfindungsgemäße Meßfühler und das Verfahren zu seiner Herstellung haben demgegenübeer den Vorteil, sehr geringe Stoffmengen, insbesondere geringste Mengen von beispielsweise Rhodium in optimaler Weise zur Verbesserung der Sensor-Regellage, insbesondere bei niedrigen Temperaturen, einzusetzen. Der erfindungsgemäße Meßfühler ist außerdem fertigungstechnisch einfach herzustellen.

Einerseits wird durch die diskrete Verteilung der bevorzugt bei erhöhter Temperatur aktiven Komponente, insbesondere des Platins, in der porösen Schutzschicht eine ausreichende katalytische Wirkung bei erhöhter Abgastemperatur erreicht, weil bei hohen Temperaturen Gasdiffusion und katalytische Reaktionen beschleunigt ablaufen. Zum anderen wird durch die homogene Verteilung der bei niedrigerer Temperatur aktiven Komponente, insbesondere von Rhodium, eine ausgezeichnete katalytische Wirksamkeit bei niedrigen Temperaturen erreicht. Durch die erfindungsgemäße Verteilung der beiden Katalysatormetalle wird weiterhin gewährleistet, daß die Zahl der direkten Kontaktstellen zwischen den beiden Katalysatormetallen und damit die unerwünschte Legierungsbildung gering ist.

Um die erfindungsgemäße Verteilung der Katalysatormetalle zu erreichen, hat es sich als besonders vorteilhaft erwiesen, den Rohstoffen zur Ausbildung der porösen Schutzschicht Platin als Pulver zuzusetzen und Rhodium als wässrige oder organische Lösung von Rhodium-Verbindungen. Für die homogene Abscheidung von hochreinem Rhodium haben sich als besonders geeignet eine wässrige Nitratlösung sowie eine organische Resinatlösung erwiesen.

Die Katalysatormetalle bzw. die die Katalysatormetalle bildenden Stoffe können mit den restlichen, die poröse Schutzschicht bildenden Rohstoffen vermischt und in einem Arbeitsgang auf die zuvor hergestellte Elektrode bzw. Elektroden aufgebracht werden. Es ist aber auch möglich, zunächst nur das Platinpulver den übrigen Rohstoffen zuzumischen und die poröse Schutzschicht fertigzustellen und in einem weiteren Arbeitsgang dieselbe mit Rhodiumlösungen zu imprägnieren und anschließend durch thermische Behandlung, vorzugsweise in reduzierender oder inerter Atmosphäre das Rhodium freizusetzen.

### Zeichnung

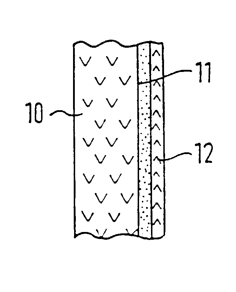

Figur 1 zeigt einen Ausschnitt aus einem elektrochemischen Meßfühler. Der Festelektrolyt 10 trägt die dem zu messenden Gas ausgesetzte Elektrode 11, die ihrerseits von der porösen keramischen Schutzschicht 12 bedeckt ist. In der Schutzschicht 12 ist eine bei hoher Temperatur katalytisch aktive Komponente diskret verteilt und eine bei niedriger Temperatur katalytisch aktive Komponente homogen verteilt.

### Beschreibung der Erfindung

Die Erfindung wird im folgenden anhand von Beispielen beschrieben.

### Beispiel 1

Eine Mischung aus 65 Gewichtsteilen Keramikmaterial, bestehend aus 60 Gewichtsteilen -Al₂O₃-Pulver (> 99 % Al₂O₃; spezifische Oberfläche 10 m²/g) und 40 Gewichtsteilen ZrO₂-Pulver (> 99 % ZrO₂; spezifische Oberfläche 1,5 m²/g), 2 Gewichtsteilen Polyvinylalkohol-Binder, 1 Gewichtsteil Platin-Pulver (> 99,9 % Platin; spezifische Oberfläche 15 m²/g), 0,4 Gewichtsteile Rhodiumnitrat (> 99,5 % Rh (NO₃)₂), Rest Wasser, wird in einer Vibratom-Mühle 6 Stunden lang gemahlen.

Die erhaltene Dispersion wird durch Spritzen auf den mit einer Elektrodenschicht versehenen Teil eines Festelektrolytkörpers in einer Schichtstärke von etwa 200 µm aufgebracht. Anschließend wird der Meßfühler etwa 3 Stunden lang bei einer Temperatur im Bereich von 1400 °C nachgesintert.

Auf diese Weise wird eine poröse Schutzschicht mit hervorragender katalytischer Aktivität bei hohen wie auch bei niedrigen Temperaturen über der dem zu messenden Gas aufgesetzten Elektrode bzw. Elektroden erhalten.

### Beispiel 2

In einer Zentrifugal-Kugelmühle werden miteinander vermahlen:
60 Gew.-Teile eines durch Kofällung erhaltenen Al₂O₃/ZrO₂-Mischoxidpulvers mit 40 Gew.-% ZrO₂ mit einer spezifischen Oberfläche von etwa 10 m²/g,
5 Gew.-Teile Polyvinylbutyral als Binder,
2,5 Gew.-Teile Dibutylphthalat als Weichmacher,
1 Gew.-% Platin-Pulver (> 99,9 % Platin; spezifische Oberfläche 15 m²/g),
1,5 Gew.-% Rhodium-Resinat (17,8 % Rhodium) sowie
30 Gew.-Teile Butylcarbitol als Lösungsmittel.

Die Mischung wird 2 Stunden lang gemahlen und anschließend durch Siebdruck auf die dem Meßgas ausgesetzte Elektrode bzw. Elekroden eines Sauerstoffmeßfühlers bekannter Art aufgebracht. Nach dem Auftrocknen wird 2 Stunden lang bei einer Temperatur im Bereich von 1400 °C gesintert.

### Beispiel 3

Durch 15-minütiges Verrühren wird eine Suspension hergestellt, die aus:
65 Gew.-Teile eines Al₂O₃/ZrO₂-Mischoxidpulvers, wie in Beispiel 2 beschrieben,
1 Gew.-Teil Platinpulver (> 99,9 % Platin; spezifische Ober- fläche 15 m²/g),
0,2 Gew.-% Rhodium-Resinat und
3,5 Gew.-Teilen eines Lösungsmittelsystems, bestehend aus 4,0 Gew.-Teilen -Terpineol, 60 Gew.-Teilen Benzylalkohol und 6 Gew.-Teilen Ethylcellulose, besteht.

Die Suspension wird durch Tauchen oder Spritzen auf den mit Elektroden versehenen Teil eines Festelektrolyt-Meßfühlers aufgebracht, eine halbe Stunde lang bei einer Temperatur im Bereich von 100 °C getrocknet und anschließend 3 Stunden bei einer Temperatur im Bereich von 1400 °C nachgesintert.

Es wird eine poröse Schutzschicht mit ausgezeichneten katalytische Eigenschaften bei hohen und niedrigen Temperaturen erhalten.

### Beispiel 4

Ausgegangen wird von einer Suspension wie unter Beispiel 3 beschrieben, jedoch ohne Zusatz von Rhodium-Resinat. Die Suspension wird auf die Elektroden aufgebracht, getrocknet und gesintert, wie unter Beispiel 3 beschrieben. Die fertige Schutzschicht wird anschließend mit einer wässrigen, 10%igen Rhodium-Nitrat-Lösung imprägniert und 1 Stunde lang bei 900 °C in reduzierender Atmosphäre ausgeheizt. Es wird wiederum eine poröse Schutzschicht mit hervorragenden katalytischen Eigenschaften erhalten.

## Patentansprüche

1. Elektrochemischer Meßfühler für die Bestimmung des Sauerstoffgehaltes in Gasen, insbesondere in Abgasen von Verbrennungsmotoren, mit einem Festelektrolyten aus stabilisiertem Zirkoniumdioxid und/oder anderen Sauerstoffionen leitenden Oxiden, mit mindestens einer Elektrode auf der dem zu messenden Gas ausgesetzten Seite des Festelektrolyten, sowie mit einer porösen keramischen Schutzschicht auf der oder den dem zu messenden Gas ausgesetzten Elektrode bzw. Elektroden, die katlytisch aktive Stoffe enthält, dadurch gekennzeichnet, daß als katalytische ative Stoffe in der porösen keramischen Schutzschicht (12) eine diskret verteilte, bei erhöhter Temperatur aktive Komponente und eine homogen verteilte, bei niedriger Temperatur aktive Komponente enthalten sind.

2. Meßfühler nach Anspruch 1, dadurch gekennzeichnet, daß die diskret verteilte Komponente Platin und die homogen vereteilte Komponente Rhodium ist.

3. Meßfühler nach Anspruch 1 oder 2, dadurch gekennzeichnet, daß die poröse keramische Schutzschicht 0,5 bis 5 Gew.-% Platin enthält.

4. Meßfühler nach Anspruch 1 oder 2, dadurch gekennzeichnet, daß die poröse keramische Schutzschicht 0,05 bis 0,5 Gew.-% Rhodium enthält.

5. Meßfühler nach einem der vorhergehenden Ansprüche, dadurch gekennzeichnet, daß die poröse keramische Schutzschicht 1 Gew.-% Platin und 0,2 Gew.-% Rhodium enthält.

6. Verfahren zur Herstellung eines elektrochemischen Meßfühler nach einem der Ansprüche 1 bis 5, dadurch gekennzeichnet, daß zur Ausbildung der porösen Schutzschicht keramische Rohstoffe, Aluminiumoxid, Magnesiumspinell und/oder Zirkoniumdioxid, Platinpulver und eine wässrige oder organische Rhodiumlösung, sowie gegebenenfalls Binder, Weichmacher und/oder Lösungsmittel vermischt und durch Spritzen, Tauchen oder Drucken auf die dem Meßgas ausgesetzte Elektrode bzw. Elektroden aufgebracht werden, getrocknet und anschließend gesintert werden.

7. Verfahren zur Herstellung eines elektrochemischen Meßfühler nach einem der Ansprüche 1 bis 5, dadurch gekennzeichnet, daß zunächst zur Ausbildung der porösen Schutzschicht keramische Stoffe, Aluminiumoxid, Magnesiumspinell und/oder Zirkoniumdioxid, Platinpulver und gegebenenfalls Binder, Weichmacher und/oder Lösungsmittel durch Spritzen, Tauchen oder Drucken auf die dem Meßgas ausgesetzte Elektrode bzw. Elektroden aufgebracht, getrocknet und gesintert werden, und daß anschließend die poröse Schutzschicht mit einer wässrigen oder organischen Rhodiumlösung imprägniert und durch Ausheizen vorzugsweise bei ca. 900° C in reduzierender Atmosphäre elementares Rhodium in hochreiner Form und in homogener Verteilung ausgeschieden wird

8. Verfahren nach Anspruch 7, dadurch gekennzeichnet, daß das Rhodium als wässrige Nitratlösung oder als organische Resinatlösung eingebracht wird.

## Claims

1. Electrochemical sensor for determining the oxygen content in gases, in particular in exhaust gases of internal combustion engines, having a solid electrolyte made of stabilized zirconium dioxide and/or other oxides which conduct by means of oxygen ions, having at least one electrode on that side of the solid electrolyte exposed to the gas to be measured, and having a porous ceramic protective layer, which contains catalytically active substances, on the electrode or electrodes exposed to the gas to be measured, characterized in that a discretely distributed component, active at elevated temperature, and a homogeneously distributed component, active at lower temperature, are contained as catalytically active substances in the porous ceramic protective layer (12).

2. Sensor according to Claim 1, characterized in that the discretely distributed component is platinum and the homogeneously distributed component is rhodium.

3. Sensor according to Claim 1 or 2, characterized in that the porous ceramic protective layer contains 0.5 to 5% by weight of platinum.

4. Sensor according to Claim 1 or 2, characterized in that the porous ceramic protective layer contains 0.05 to 0.5% by weight of rhodium.

5. Sensor according to one of the preceding claims, characterized in that the porous ceramic protective layer contains 1% by weight of platinum and 0.2% by weight of rhodium.

6. Process for the production of an electrochemical sensor according to one of Claims 1 to 5, characterized in that, in order to form the porous protective layer, ceramic starting materials, aluminium oxide, magnesium spinel and/or zirconium dioxide, platinum powder and an aqueous or organic rhodium solution, and optionally binders, plasticizers and/or solvents are thoroughly mixed and are applied by spraying, dipping or printing onto the electrode or electrodes exposed to the gas to be measured, are dried and are subsequently sintered.

7. Process for the production of an electrochemical sensor according to one of Claims 1 to 5, characterized in that, firstly, in order to form the porous protective layer, ceramic materials, aluminium oxide, magnesium spinel and/or zirconium dioxide, platinum powder and optionally binders, plasticizers and/or solvents are applied by spraying, dipping or printing to the electrode or electrodes exposed to the gas to be measured, are dried and are sintered, and in that the porous protective layer is subsequently impregnated with an aqueous or organic rhodium solution and elementary rhodium in highly pure form and with homogeneous distribution is deposited by heating, preferably at about 900°C in a reducing atmosphere.

8. Process according to Claim 7, characterized in that the rhodium is introduced as an aqueous nitrate solution or as an organic resinate solution.

## Revendications

1. Capteur de mesure, électrochimique pour déterminer la teneur en oxygène dans des gaz, notamment des gaz d'échappement de moteurs à combustion interne, comprenant des électrolytes solides d'oxyde de zirconium stabilisé et/ou d'autres oxydes conducteurs d'ions d'oxygène, au moins une électrode du côté de l'électrolyte solide exposée au gaz à mesurer ainsi qu'une couche protectrice de céramique poreuse sur la ou les électrodes exposées au gaz à mesurer, cette couche contenant des matières catalytiques actives,
caractérisé en ce que
les matières catalytiques actives contenues dans la couche protectrice (12) de céramique poreuse comprennent un composant actif à températures élevées, distribué de manière discrète, et un composant actif à températures faibles, distribué de manière homogène.

2. Capteur de mesure selon la revendication 1,
caractérisé en ce que
le composant distribué de manière discrète est du platine et le composant réparti de manière homogène est du rhodium.

3. Capteur de mesure selon la revendication 1 ou 2,
caractérisé en ce que
la couche protectrice de céramique poreuse contient entre 0,5 et 5 % en poids de platine.

4. Capteur de mesure selon la revendication 1 ou 2,
caractérisé en ce que
la couche de céramique poreuse contient entre 0,05 et 0,5 % en poids de rhodium.

5. Capteur de mesure selon l'une des revendications précédentes,
caractérisé en ce que
la couche protectrice de céramique poreuse contient 1 % en poids de platine et 0,2 % en poids de rhodium.

6. Procédé de fabrication d'un capteur de mesure électrochimique selon l'une quelconque des revendications 1 à 5,
caractérisé en ce que
pour former la couche protectrice de céramique poreuse, on mélange comme matière première en céramique, de l'oxyde d'aluminium, du spinelle de magnésium et/ou du dioxyde de zirconium, de la poudre de platine et une solution aqueuse ou organique de rhodium ainsi que, le cas échéant, un liant, un adoucisseur et/ou un solvant, et on applique le mélange par pulvérisation, immersion ou impression sur la ou les électrodes exposées au gaz à mesurer, puis on sèche et on fritte.

7. Procédé de fabrication d'un capteur de mesure électrochimique selon l'une quelconque des revendications 1 à 5,
caractérisé en ce que
tout d'abord pour réaliser la couche protectrice poreuse on applique sur la ou les électrodes exposées au gaz à mesurer, des matières céramiques, de l'oxyde d'aluminium, du spinelle de magnésium et/ou du dioxyde de zirconium, de la poudre de platine et, le cas échéant, un liant, des adoucisseurs et/ou un solvant, par projection, immersion ou impression, puis on sèche et on fritte ; on imprègne ensuite dans la couche protectrice poreuse une solution aqueuse ou organique de rhodium et on dépose le rhodium élémentaire sous un état très pur et sur une distribution homogène, par chauffage de préférence à environ 900°C, sous une atmosphère réductrice.

8. Procédé selon la revendication 7,
caractérisé en ce que
le rhodium est appliqué comme solution aqueuse de nitrate ou comme solution organique de résinate.
